# EUROPÄISCHE PATENTSCHRIFT

(11) **EP 2 100 831 B1**
(45) Veröffentlichungstag und Bekanntmachung des Hinweises auf die Patenterteilung: **03.05.2017**
(21) Anmeldenummer: 09002978.6
(22) Anmeldetag: 03.03.2009
(51) Int. Cl.: B65G 27/20, B65G 7/04, B65G 67/20

(54) **Transportwagen für Paletten und Transportsystem**
Transport vehicle for palettes and transport system
Véhicule de transport pour palettes et système de transport

(30) Priorität: 12.03.2008 DE 102008014877
(43) Veröffentlichungstag der Anmeldung: 16.09.2009
(73) Patentinhaber: Alfred Arnold eingetragener Kaufmann Verladesysteme, 70469 Stuttgart (DE)
(72) Erfinder: Arnold, Annette Dr.-Ing., 70469 Stuttgart (DE)
(74) Vertreter: Patentanwälte Ruff, Wilhelm, Beier, Dauster & Partner mbB

(56) Entgegenhaltungen:
- EP-A- 0 198 738
- EP-A- 1 967 484
- WO-A2-2009/043474
- DE-A1- 2 706 986
- DE-A1- 3 244 198
- JP-A- 11 130 268
- US-A- 3 973 685
- US-A- 5 374 151
- US-A1- 2004 197 172

## Beschreibung

Die Erfindung betrifft einen Transportwagen für Paletten mit einer Tragschiene, wenigstens zwei Tragrollen, einem Hubantrieb für die Tragschiene sowie einem Fahrantrieb. Die Erfindung betrifft auch ein Transportsystem für Paletten mit wenigstens zwei erfindungsgemäßen Transportwagen.

Bekannte Transportwagen für Paletten weisen zwei parallel zueinander angeordnete Tragschienen auf, die im Bereich eines Antriebs- und Hubblocks miteinander verbunden sind. Mittels der Tragschienen kann eine Palette unterfahren werden und nach Anheben der Tragschienen kann die Palette dann abgefahren werden. Zum Verladen von Paletten mittels solcher Transportwagen, die als handbetriebene oder elektrisch betriebene Hubwagen verfügbar sind, muss zunächst eine Palette auf die Tragschienen aufgesetzt, angehoben werden und dann an ihren Bestimmungsort verbracht werden, beispielsweise in den Laderaum eines Lastkraftwagens. Bei modernen Logistiksystemen werden mit Gütern beladene Paletten automatisch an einem Übergabeplatz bereitgestellt. Solche Übergabeplätze befinden sich in Verlängerung einer Laderampe, an der dann ein Lastkraftwagen mit der Rückseite platziert wird. Ausgehend vom Übergabeplatz können die Paletten dann mittels bekannter Transportwagen in den Laderaum gefahren werden. Bei konventionellen Transportwagen erfordert dies grundsätzlich ein Wendemanöver, da die Übergabestation ja gegenüber der Laderampe angeordnet ist. Das Verladen von Paletten mittels bekannter Transportwagen ist daher nicht ohne Weiteres automatisierbar.

Die europäische Offenlegungsschrift EP 0 198 738 A1 betrifft einen Transportwagen für Paletten, der aus einem Zugfahrzeug und mehreren Ketten aus miteinander verbundenen Hubwagen besteht. Mittels des Zugfahrzeugs werden die Hubwagen unter hintereinander angeordnete Paletten gefahren. Die hintereinander angeordneten Paletten können dann gemeinsam angehoben und mittels des Zugfahrzeugs in einen Lastkraftwagen geschoben werden. Wenn der Palettenstapel auf der Ladefläche des Lastkraftwagens positioniert ist, werden die Hubwagen wieder abgesenkt und mittels des Zugfahrzeugs unter dem Palettenstapel hervorgezogen. Die in mehreren Ketten vorgesehenen Hubwagen werden mittels des Zugfahrzeugs von einer Seite her unter den Palettenstapel gefahren und auf dieser Seite auch wieder unter dem Palettenstapel herausgezogen.

Aus der nicht vorveröffentlichten internationalen Offenlegungsschrift WO 2009/043474 A2 ist ein Transportwagen für Paletten mit einer Tragschiene, Tragrollen, einem Hubantrieb für die Tragschiene sowie einem Fahrantrieb bekannt, wobei der Transportwagen im abgesenktem Zustand niedriger und schmäler ist als die Durchfahrtsöffnungen einer Euro-Palette. Der Transportwagen ist auf seiner gesamten Länge zum Unterfahren von Euro-Paletten geeignet und kann unter den Paletten hindurchfahren. Die Tragrollen, der Hubantrieb und der Fahrantrieb sind zwischen einer durch die Aufstandspunkte der Tragrollen definierten Fahrbahnebene und einer Oberseite der Tragschiene angeordnet. Die Tragschiene ist im Wesentlichen starr ausgebildet und erstreckt sich über die gesamte Länge des Transportwagens. US 5,374,151 offenbart einen automatisch geführten Transportwagen (AGV) für Paletten, mit einer Tragschiene, wenigstens zwei Tragrollen, einem Hubantrieb für die Tragschiene sowie einem Fahrantrieb, wobei der Transportwagen im abgesenkten Zustand niedriger und schmäler ist als die Durchfahrtsöffnungen einer Euro-Palette und auf seiner gesamten Länge zum Unterfahren von Euro-Paletten geeignet ist und unter den Paletten hindurchfahren kann, wobei die wenigstens zwei Tragrollen und der Hubantrieb zwischen einer durch die Aufstandspunkte der Tragrollen definierten Fahrbahnebene und einer Oberseite der Tragschiene angeordnet sind. Mit der Erfindung soll ein Transportwagen für Paletten und ein Transportsystem für Paletten bereitgestellt werden, das auf einfache Weise die automatische Verladung von Paletten ermöglicht. Insbesondere soll die automatische Beladung und Entladung von Lastkraftwagen ermöglicht werden, deren Laderaum keine speziellen, auf das erfindungsgemäße Transportsystem abgestimmten Vorrichtungen aufweist. Erfindungsgemäß ist hierzu ein Transportwagen für Paletten mit den Merkmalen von Anspruch 1 vorgesehen. Zweckmäßige Weiterbildungen der Erfindung sind in den Unteransprüchen angegeben.
Da eine obere Begrenzung des Transportwagens somit durch eine Oberseite der Tragschiene definiert ist, kann der Transportwagen wenigstens im abgesenkten Zustand vollständig unterhalb einer Palette durchfahren. Dadurch kann der Transportwagen für das Verladen von Paletten mit einem ersten Ende voran eine Palette unterfahren, die Palette dann anheben und an ihren Bestimmungsort transportieren und erneut mit dem ersten Ende voran unter der Palette herausfahren. Es wird dadurch möglich, Paletten von einer Übergabestation linear und ohne Wendemanöver des Transportwagens auf die Ladefläche eines Lastkraftwagens zu transportieren. Da der Transportwagen in seiner abgesenkten Stellung so flach ist, dass er auf seiner vollständigen Länge eine Palette unterfahren kann, können die Paletten auf der Ladefläche des Lastkraftwagens abgestellt werden und der Transportwagen kann entgegengesetzt zur Einfahrrichtung wieder ausfahren. Der erfindungsgemäße Transportwagen schafft dadurch die Voraussetzungen für eine automatische Verladung von Paletten, bei der zwischen dem Anheben der Paletten an einer Übergabestation und dem Absetzen der Paletten auf der Ladefläche eines Lastkraftwagens, bzw. umgekehrt, keine Wendemanöver des Transportwagens erforderlich sind. Speziell erlaubt es der erfindungsgemäße Transportwagen, eine automatische Verladung in Lastkraftwagen zu bewerkstelligen, die nicht in spezieller Weise auf den erfindungsgemäßen Transportwagen abgestimmt sind. Der erfindungsgemäße Transportwagen kann auf einer normalen Fahrbahn fahren, so dass er auch auf die Ladefläche eines Lastkraftwagens fahren und dort Paletten absetzen oder aufnehmen kann.

In Weiterbildung der Erfindung weist die Tragschiene in der Draufsicht eine langgestreckte, rechteckartige Form auf, die sich an beiden Enden verjüngt.

Auf diese Weise hat die Tragschiene an beiden Enden eine selbstzentrierende Form und kann auch bei leichten Seitenversatz problemlos unter eine Palette eingefahren werden.

In Weiterbildung der Erfindung weist die Tragschiene einen U-förmigen Querschnitt auf, wobei eine Basis der U-Form eine Oberseite und die Schenkel nach unten abragende Seitenschürzen der Tragschiene bilden.

Die Verwendung eines U-förmigen Querschnitts für die Tragschiene erlaubt es, den unterhalb der Tragschiene angeordneten Hubantrieb und Fahrantrieb geschützt unterzubringen. U-Profile haben alleine aufgrund ihrer Form eine sehr hohe Steifigkeit und sind darüber hinaus als Standardteile in ausreichender Festigkeit verfügbar, so dass die erfindungsgemäßen Transportwagen kostengünstig aufgebaut werden können.

In Weiterbildung der Erfindung weist eine erste der Tragrollen einen Abstand von einem ersten Ende der Tragschiene auf, der in einem Bereich liegt, der sich vom ersten Ende aus bis zu einem Drittel, insbesondere einem Sechstel, der Gesamtlänge der Tragschiene erstreckt und eine zweite der Tragrollen weist einen Abstand von einem zweiten Ende der Tragschiene auf, der in einem Bereich liegt, der sich vom ersten Ende bis zu einem Drittel, insbesondere einem Sechstel der Gesamtlänge der Schiene erstreckt.

Mittels einer solchen Anordnung der Tragrollen können zum einen die im beladenen Zustand erheblichen Gewichtskräfte auf die Tragschiene aufgenommen werden, ohne dass die Tragschiene übermäßiger Verformung ausgesetzt ist. Vor allem kann durch eine solche Anordnung der Tragrollen auch gewährleistet werden, dass im Fahrbetrieb des Transportwagens auch bei hochbeladenen Paletten kein Kippen der Last von der Palette zu befürchten ist, wenn der Transportwagen durch ein Hindernis abrupt gestoppt wird. Auch bei einer Länge des Transportwagens, die drei Paletten entspricht, kann bei einer solchen Anordnung der Tragrollen auch nur eine Palette am vorderen oder hinteren Ende aufgeladen werden.

In Weiterbildung der Erfindung entspricht eine Länge der Tragschiene im Wesentlichen der Länge von drei hintereinander angeordneten Paletten.

Auf diese Weise können drei hintereinander angeordnete Paletten gleichzeitig automatisch verladen werden. Dies erlaubt eine effiziente und zeitsparende automatische Verladung von Paletten in Lastkraftwagen. Die Gewichtskraft von drei hintereinander angeordneten und voll beladenen Paletten ist dabei gerade noch so groß, dass sie von den erfindungsgemäßen Transportwagen aufgenommen werden können und das die Transportwagen auch im beladenen Zustand noch selbstständig den vorgesehenen Transportweg überwinden können. Erfindungsgemäß sind am ersten und/oder am zweiten Ende der Tragschiene Sensoren eines Abstandes in Längsrichtung vorgesehen.

Auf diese Weise kann mittels der Transportwagen erfasst werden, wenn eine Aufnahmestelle oder Abgabestelle für Paletten erreicht ist. Die Transportwagen werden im abgesenkten Zustand in Richtung einer Aufnahmestelle und unter die aufzunehmenden Paletten gefahren. Sobald ein Sensor erkennt, dass eine Endposition erreicht ist, wird der Fahrantrieb der Transportwagen gestoppt und der Hubantrieb ausgelöst. Nach dem Anheben der Paletten an der Übergabestelle werden diese dann entlang dem Transportweg auf die Ladefläche des Lastkraftwagens gefahren. Ist eine Endposition auf der Ladefläche erreicht, beispielsweise am vorderen Ende der Ladefläche oder anstoßend an bereits eingeladene Paletten, wird dies ebenfalls von einem Sensor erfasst, der Fahrantrieb des Transportwagens stoppt und die Paletten werden auf der Ladefläche abgesetzt. Im abgesenkten Zustand kann der Transportwagen dann wieder unter der Paletten herausfahren und zur Übergabestation zurückkehren, um gegebenenfalls weitere Paletten aufzunehmen. Erfindungsgemäß sind Sensoren zum Erfassen eines seitlichen Abstandes der Tragschiene zu einer Seitenbegrenzung und/oder zu einem weiteren Transportwagen vorgesehen.

Euro-Paletten weisen zwei Gassen auf, in die die erfindungsgemäßen Transportwagen einfahren können. Zum Anheben einer Europalette werden daher stets zwei erfindungsgemäße Transportwagen benötigt. Im beladenen Zustand wird ein Abstand der Transportwagen zueinander mittels der Palette fixiert. Im unbeladenen Zustand und insbesondere vor dem Einfahren unter eine Palette ist eine vergleichsweise exakte Einhaltung des Seitenabstandes zwischen zwei Transportwagen aber wichtig. Hier können die Sensoren den seitlichen Abstand erfassen und beim Abweichen von einem Sollzustand Schaltsignale auslösen, die dann zum Einleiten von Korrekturmaßnahmen verwendet werden können. Darüber hinaus kann es sinnvoll sein, mittels geeigneter Sensoren den seitlichen Abstand der Tragschiene zu einer Seitenbegrenzung zu erfassen. Beispielsweise kann bei mehreren, nebeneinander fahrenden Transportwagen der jeweils äußere Transportwagen den seitlichen Abstand zu einer Seitenbegrenzung erfassen, insbesondere dann, wenn die Ladefläche eines Lastkraftwagens befahren wird. Die jeweils innen liegenden Transportwagen können ihre Position dann mittels der Erfassung des Seitenabstandes zum benachbarten Transportwagen bestimmen. Es ist beispielsweise aber auch möglich, dass jeder Transportwagen mit Sensoren versehen ist, um sowohl den Abstand zu einem oder beiden benachbarten Transportwagen als auch zu einer oder zwei Seitenbegrenzungen zu erfassen.

In Weiterbildung der Erfindung ist eine in Fahrtrichtung des Transportwagens ausfahrbare Teleskopschiene vorgesehen, um den Transportwagen wenigstens in einem Teilbereich seines Transportweges zu führen.

Beispielsweise können solche Teleskopschienen anstelle von Sensoren vorgesehen werden, um eine Seitenführung der Transportwagen auf einer Ladefläche eines zu beladenden oder zu entladenden Nutzfahrzeugs zu führen. Die Teleskopschienen können beispielsweise am Transportwagen selbst angebracht sein und beispielsweise beim Überqueren der Kante zwischen Laderampe und Ladefläche des Lastkraftwagens automatisch einhaken, um dann während der Bewegung der Transportwagen in den Lastkraftwagen hinein auszufahren und die Transportwagen dadurch in der Spur zu halten. Nach Rückkehr der Transportwagen zur Kante der Laderampe sind die Teleskopschienen dann beispielsweise wieder vollständig eingefahren und verbleiben im eingefahrenen Zustand im Transportwagen während dessen Bewegung auf der Laderampe zum Übergabeplatz. Alternativ ist es auch möglich, die Teleskopschienen ortsfest an der Kante der Laderampe anzuordnen, so dass ein Transportwagen bei seiner Bewegung auf die Ladefläche des Nutzfahrzeugs automatisch an die Teleskopschiene angekoppelt wird und nach seiner Rückkehr an die Kante der Laderampe wieder automatisch von der Teleskopschiene entkoppelt wird. Schließlich ist es auch möglich, den Transportwagen sowohl auf der Ladefläche des Nutzfahrzeugs als auch auf der Laderampe bis zum Übergabeplatz mittels einer Teleskopschiene zu führen, die beispielsweise ortsfest an der Kante der Laderampe im Gebäude angeordnet ist und in zwei entgegengesetzte Richtungen ausziehbar ist. Die Teleskopschienen werden vorteilhafterweise innerhalb des Transportwagens angebracht und die einzelnen Elemente sind beispielsweise annähernd so lang wie der Transportwagen, um mit wenigen Elementen eine große Auszugslänge zu erreichen und die Teleskopschiene auch im zusammengeschobenen Zustand noch innerhalb des Transportwagens anbringen zu können.

In Weiterbildung der Erfindung ist wenigstens eine mit dem Fahrantrieb gekoppelte Antriebsrolle, die insbesondere eine der Tragrollen ist, vorgesehen, die mit der Fahrbahnebene in Kontakt steht. Vorteilhafterweise sind wenigstens zwei Antriebsrollen vorgesehen, wobei eine erste der Antriebsrollen auf einer ersten Seite der Mittellängsachse der Tragschiene und eine zweite der Antriebsrollen auf einer zweiten, der ersten Seite in Bezug auf die Mittellängsachse gegenüberliegenden Seite angeordnet ist.

Die Tragrollen oder Antriebsrollen sind lenkbar.

In Weiterbildung der Erfindung ist der Hubantrieb als elektromechanischer Antrieb ausgebildet.

Elektromechanische Antriebe sind gut geeignet, da sie zum einen kompakt sind und zum anderen große Hubkräfte aufbringen können. Darüber hinaus ist lediglich elektrische Energie erforderlich, die problemlos mittels Versorgungskabeln oder sogar mittels Akkumulatoren bereitgestellt werden kann. Im Vergleich zu pneumatischen Systemen ist in der Regel die Geräuschentwicklung von elektromechanischen Antrieben wesentlich geringer.

In Weiterbildung der Erfindung ist eine elektrische Kabelzuleitung vorgesehen, die zur Aufnahme von zum Bewegen und/oder zum Korrigieren der Bewegungsrichtung des Transportwagens ausreichenden Kräften ausgebildet ist.

Eine elektrische Kabelzuleitung kann die Versorgung mit elektrischer Energie sicherstellen, sie kann aber auch als Zugseil verwendet werden, beispielsweise um den Transportwagen von der Ladefläche eines Lastkraftwagens herunter wieder zur Übergabestelle zu ziehen. Die elektrische Kabelzuleitung kann dabei als alleinige Antriebsquelle während dieser Rückholbewegung genutzt werden, vorteilhafterweise wird die elektrische Kabelzuleitung aber lediglich zusätzlich zum Aufbringen zusätzlicher Zugkräfte genutzt. Alternativ oder zusätzlich kann die elektrische Kabelzuleitung lediglich zum Korrigieren der Bewegungsrichtung des Transportwagens genutzt werden, indem also der Transportwagen mittels der Kabelzuleitung wieder in seine vorgesehene Spur gezogen wird.

Das der Erfindung zugrundeliegende System, wird auch durch ein Transportsystem für Paletten mit wenigstens zwei erfindungsgemäßen Transportwagen gelöst.

Mittels zweier Transportwagen kann eine Palette, beispielsweise eine Euro-Palette, unterfahren und angehoben und an einen vorbestimmten Bestimmungsort verbracht werden. Als besonders vorteilhaft in Bezug auf Verladegeschwindigkeit und Flächenbedarf hat sich der Einsatz von insgesamt sechs Transportwagen erwiesen, die jeweils drei Paletten lang sind, so dass also maximal neun Paletten gleichzeitig verladen werden können.

In Weiterbildung der Erfindung weist eine Fahrbahn für die Transportwagen wenigstens abschnittsweise, insbesondere in einem Gebäudeabschnitt, Führungsschienen auf.

Durch Vorsehen von Führungsschienen können die Transportwagen geradlinig geführt werden. Führungsschienen können daher Sensoren und Mittel zum Vorsehen von Lenkkorrekturen vereinfachen oder vollständig überflüssig machen. Wenn Führungsschienen in einer Fahrbahn vorgesehen sind, so sind diese entweder sehr niedrig oder unter die Fahrbahnoberfläche abgesenkt, so dass die Führungsschienen in Querrichtung, beispielsweise mit einem Gabelstapler, problemlos überfahren werden können. Zweckmäßigerweise enden die Führungsschienen an einer Laderampe und auf der Ladefläche eines zu beladenden Lastkraftwagens selbst sind dann keine Führungsschienen mehr vorgesehen. Dies ermöglicht es, LKWs zu beladen, deren Ladeflächen nicht in spezieller Weise auf das erfindungsgemäße Transportsystem abgestimmt sind.

In Weiterbildung der Erfindung ist insbesondere in einem Gebäudeabschnitt eine Übergabestation vorgesehen, wobei in der Übergabestation Paletten mittels Fördertechnik hintereinander aufgereiht anordenbar sind.

Mittels einer solchen Übergabestation können Paletten so angeordnet werden, dass sie mittels der erfindungsgemäßen Transportwagen unterfahren, angehoben und in Richtung der Ladefläche eines LKWs abtransportiert werden können. Solche Übergabestationen können beispielsweise der Endpunkt einer automatischen Fördertechnik sein, die eine automatische Bestückung von Paletten, beispielsweise aus einem Hochregallager, vorsieht. Wesentlich ist, dass das erfindungsgemäße Transportsystem auch Paletten vom Boden an einer Übergabestelle aufnehmen kann. Mit dem erfindungsgemäßen Transportsystem kann dadurch die voll automatisierte Beladung von LKWs mit Paletten realisiert werden, ohne dass die Ladefläche der Lastkraftwagen oder der Boden der Übergabestelle hierzu in spezieller Weise angepasst werden müssten.
Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine schematische Darstellung von zwei erfindungsgemäßen Transportwagen und einer Palette,
- Fig. 2: eine Ansicht von schräg oben auf ein erfindungsgemäßes Transportsystem,
- Fig. 3: eine Draufsicht auf einen erfindungsgemäßen Transportwagen,
- Fig. 4: eine Seitenansicht des Transportwagens der Fig. 3,
- Fig. 5: eine Ansicht auf die Schnittebene V-V der Fig. 3, wobei sich der Transportwagen im abgesenkten Zustand befindet,
- Fig. 6: eine Ansicht auf die Schnittebene VI-VI der Fig. 4,
- Fig. 7: eine Schnittansicht auf die Ebene V-V der Fig. 3, wobei sich der Transportwagen im Unterschied zur Ansicht der Fig. 5 im abgesenkten Zustand befindet,
- Fig. 8: eine schematische Draufsicht auf ein erfindungsgemäßes Transportsystem gemäß einer weiteren Ausführungsform der Erfindung,
- Fig. 9: eine schematische Draufsicht auf ein erfindungsgemäßes Transportsystem gemäß einer weiteren Ausführungsform der Erfindung,
- Fig. 10: eine schematisch Ansicht von unten eines Transportwagens gemäß einer weiteren Ausführungsform der Erfindung,
- Fig. 11: eine abschnittsweise schematische Seitenansicht des Transportwagens der Fig. 11 und
- Fig. 12: eine schematische Seitenansicht auf ein weiteres Transportsystem mit einem nicht erfindungsgemäßen Transportwagen.

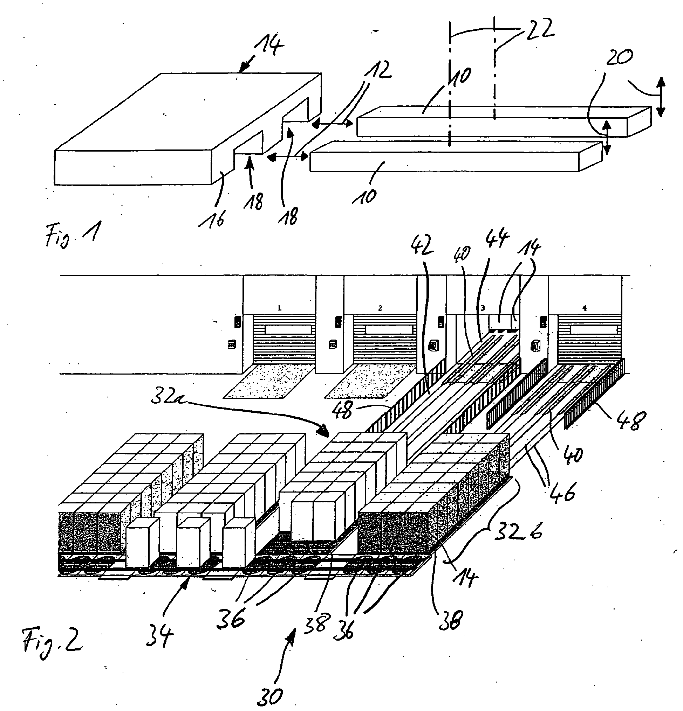

In der Darstellung der Fig. 1 sind zwei nebeneinander angeordnete erfindungsgemäße Transportwagen 10 dargestellt, die auf ihrer gesamten Länge so flach ausgebildet sind, dass sie entlang der Pfeile 12 eine Palette 14 unterfahren können. Die Palette 14 ist als sogenannte Euro-Palette ausgebildet und steht auf einem Boden mit insgesamt drei parallel zueinander angeordneten leistenartigen Vorsprüngen 16 auf. Zwischen diesen Vorsprüngen 16 sind zwei Durchfahrtsöffnungen 18 gebildet, die von den Transportwagen 10 in voller Länge durchquert werden können. Die Transportwagen 10 sind mit einem nicht dargestellten Fahrantrieb sowie einem nicht dargestellten Hubantrieb versehen. Mittels des Fahrantriebs fahren die Transportwagen 10 in die Durchfahrtsöffnungen 18 ein, bis das in Fig. 1 linke Ende der Transportwagen 10 mit dem in Fig. 1 linken Ende der Palette 14 zur Deckung kommt. Die Transportwagen befinden sich dann abschnittsweise unterhalb der Palette 14 und können dann mittels des Hubantriebs in Richtung der Pfeile 20 angehoben werden, bis die Vorsprünge 16 der Palette 14 vom Boden freikommen und diese dann somit ausschließlich auf den Transportwagen 10 aufliegt. In diesem angehobenen Zustand können die Transportwagen 10 dann die Palette 14 entgegengesetzt zur Einfahrrichtung abtransportieren.

Nach erneutem Absetzen der Palette 14 können die Transportwagen 10 dann in der ursprünglichen Einfahrrichtung unter der Palette 14 hindurchfahren, da die Transportwagen 10 ja im abgesenkten Zustand auf ihrer gesamten Länge niedriger und schmäler sind als die Durchfahrtsöffnungen 18. Mittels der Transportwagen 10 kann die Palette 14 somit entlang einem linearen Transportweg verfahren werden, ohne dass die Transportwagen 10 zwischen Aufnehmen und Absetzen der Palette 14 ein Wendemanöver im Sinne einer Drehung um eine Hochachse 22 durchführen müssten, stattdessen genügt ein einfacher Richtungswechsel gemäß den Doppelpfeilen 12.

Die Darstellung der Fig. 2 zeigt ein erfindungsgemäßes Transportsystem 30, das zum automatischen Verladen von Paletten 14 vorgesehen ist. Das erfindungsgemäße Transportsystem 30 weist zwei Ladetore auf, die in der Darstellung der Fig. 2 mit der Ziffer 3 bzw. 4 bezeichnet sind. Die ebenfalls in Fig. 2 dargestellten Ladetore mit der Bezugsziffer 1 bzw. 2 sind konventionell ausgebildet und erfordern einen Hubwagen oder einen Gabelstapler, um Paletten zur Laderampe an dem jeweiligen Ladetor zu bringen.

Das erfindungsgemäße Transportsystem 30 weist an jedem Ladetor 3 bzw. 4 eine Übergabestation 32a, 32b auf, an der die Paletten 14 hintereinander aufgereiht mittels Fördertechnik bereitgestellt werden. Die in Fig. 2 dargestellten Paletten 14 sind sämtlich beladen, der Einfachheit halber wird dennoch nur von Paletten gesprochen. Die Fördertechnik weist ein Transportband 34 auf, auf dem die Paletten 14 zugefördert werden. Unmittelbar vor jeder Übergabestation 32a, 32b sind insgesamt drei Wendetische 36 angeordnet, mit denen die Paletten 14 um jeweils 90° gedreht und in die Übergabestationen 32a, 32b eingeschoben werden können. Die Übergabestation 32b vor dem Ladetor 4 ist bereits vollständig mit insgesamt 24 Paletten gefüllt, wohingegen die Übergabestation 32a vor dem Ladetor 3 noch nicht mit der maximal möglichen Anzahl an Paletten befüllt ist. Die Übergabestationen 32a, 32b weisen jeweils eine Rollenfördereinheit 38 auf, auf der die Paletten 14 abgestellt werden und die dann eine leichte Neigung oder angetriebene Rollen aufweist, um die Paletten 14 bis an das dem jeweiligen Ladetor 3 bzw. 4 zugewandten Ende der Rollenbahn 38 zu transportieren. Die Rollenbahn 38 ist dabei so ausgebildet, dass die Durchfahrtsöffnungen 18 jeder Palette nach unten hin frei sind, dass also unterhalb der Durchfahrtsöffnungen 18 lediglich eine Fahrbahnebene aber keine Rollenbahn mehr angeordnet ist.

Zum Aufnehmen der Paletten 14 sind auf jeder Transportbahn insgesamt sechs erfindungsgemäße Transportwagen 40 vorgesehen. Jeder der Transportwagen 40 weist die Länge von drei hintereinander aufgereihten Paletten 14 auf. Bei der dargestellten Ausführungsform können daher mit jeweils zwei Transportwagen 40 drei hintereinander angeordnete Paletten 14 auf einmal angehoben und verladen werden. Die Transportwagen 40 sind am Ladetor 3 in einer Position dargestellt, in der sie teilweise noch auf einer Fahrbahn 42 in einem Gebäudeabschnitt und teilweise bereits auf einer Ladefläche 44 in einem nicht weiter dargestellten Lastkraftwagen angeordnet sind. Auf der Ladefläche 44 sind bereits zwei Paletten 14 zu erkennen, die mittels der Transportwagen 40 auf die Ladefläche 44 transportiert und dort abgestellt wurden.

Die Transportwagen 40 am Ladetor 3 werden sich infolgedessen ausgehend von der in Fig. 2 dargestellten Position in Richtung der Übergabestation 32a bewegen, dort erneut Paletten 14 aufnehmen und diese dann auf die Ladefläche 44 transportieren und dort absetzen.

Umgekehrt könnten die Transportwagen 40 die auf der Ladefläche 44 stehenden Paletten 14 aufnehmen und diese an der Übergabestation 32a absetzen. Die Übergabestation 32a kann dann in einem Entlademodus Paletten 14 auf die Wendetische 36 übergeben und das Förderband 34 bewegt die Paletten 14 dann, in der Fig. 2 nach links, in ein geeignetes Lager.

Im Bereich des Ladetores 4 sind ebenfalls sechs erfindungsgemäße Transportwagen 40 dargestellt, die sich aber unmittelbar vor dem noch geschlossenen Ladetor 4 befinden.

Jeder der Transportwagen 40 ist mit einem elektrischen Zuleitungskabel 46 versehen, das an einem, den Übergabestationen 32a, 32b zugewandten Ende der Transportwagen 40 befestigt ist und in nicht dargestellter Weise unterhalb der Übergabestationen 32a, 32b umgelenkt ist. Mittels des elektrischen Zuleitungskabels 46 können zum einen die Fahrantriebe und Hubantriebe der Transportwagen 40 mit Energie versorgt und angesteuert sowie Sensorsignale übertragen werden, die elektrischen Zuleitungskabel 46 können darüber hinaus aber auch als Zugseile dienen, um die Transportwagen 40 von der Ladefläche 44 herunter und wieder in den Bereich der Übergabestationen 32a, 32b zu ziehen. Diese Wirkung der elektrischen Zuleitungen 46 als Zugseile kann beispielsweise nur dann eingesetzt werden, wenn die Transportwagen 40 in ihrer Bewegungsrichtung korrigiert werden sollen.

Jeder Transportweg von einer jeweiligen Übergabestation 32a, 32b zum jeweiligen Ladetor 3 bzw. 4 ist seitlich mit Absperrgittern 48 versehen, die ausgezogen oder eingeschoben werden können. Der Transportweg zum Ladetor 4 zeigt die Sicherungsgitter 48 im eingeschobenen Zustand. Zwischen der Übergabestation 32b und den Sicherungsgittern 48 kann dadurch noch ein Fahrzeug oder ein Fußgänger die Transportwege queren.

An dem Transportweg von der Übergabestation 32a zum Ladetor 3 sind die Sicherungsgitter 48 im ausgezogenen Zustand dargestellt und sperren damit den Transportweg seitlich ab. Aus Sicherheitsgründen können die Transportgitter 48 bei automatischer Verladung erforderlich sein und es können beispielsweise Sicherungsvorrichtungen vorgesehen sein, die einen Betrieb der Transportwagen 40 bei nicht ausgezogenen Sicherungsgittern 48 verhindern.

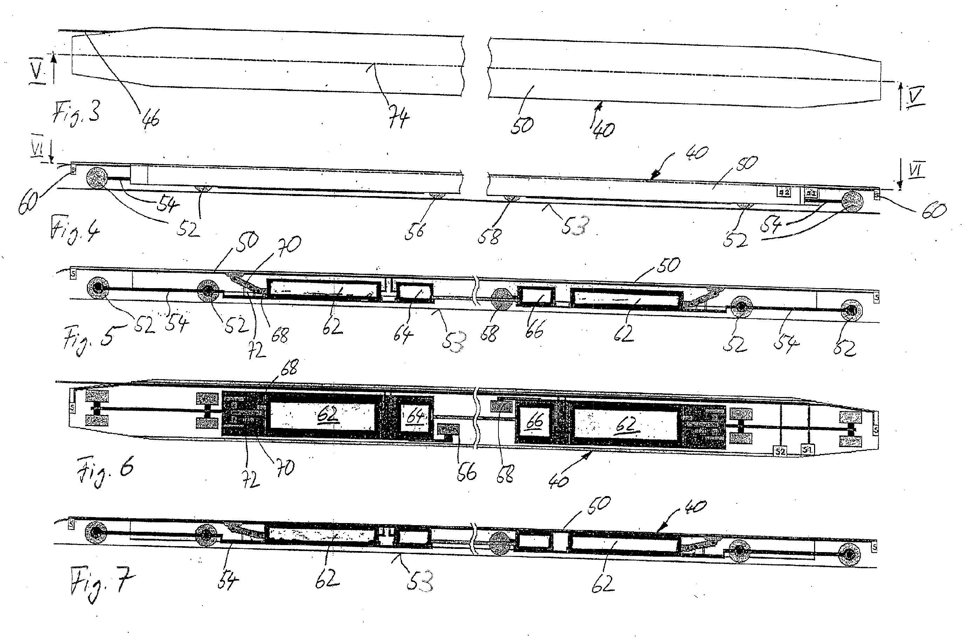

Die Draufsicht der Fig. 3 zeigt abschnittsweise einen der Transportwagen 40. Der Transportwagen 40 ist mit einer Tragschiene 50 versehen, die eine durchgehende Oberseite des Transportwagens 40 bildet und auf der die Paletten ruhen können. Die Tragschiene 50 ist an ihren beiden Enden sich verjüngend ausgebildet, um ein Einfädeln des Transportwagens 40 in die Durchfahrtsöffnungen 18 einer Palette auch bei geringfügigen Positionsabweichungen zu ermöglichen. Von dem in Fig. 3 linken Ende des Transportwagens 40 geht das elektrische Zuleitungskabel 46 aus.

In der Seitenansicht des Transportwagens 40 in Fig. 4 ist zu erkennen, dass die Tragschiene 50 die Form eines umgekehrten U-Profils aufweist, das sich in Richtung einer Fahrbahnoberfläche 52 öffnet. Eine Basis des U-Profils bildet somit die Oberseite der Tragschiene 50, die beiderseitigen Schenkel bilden seitlich von der Oberseite nach unten abragende Schürzen. Im Bereich der beiden Enden der Tragschiene 50, die verjüngt sind, sind die seitlichen Schürzen abgeschnitten.

Der Transportwagen 40 ist mit insgesamt acht Tragrollen 52 versehen, die mittels eines lediglich schematisch dargestellten Fahrgestells 54 miteinander verbunden und an diesem drehbar gelagert sind. In der Darstellung der Fig. 4 sind lediglich vier der acht Tragrollen zu erkennen. Neben den Tragrollen 52 ist der Transportwagen 40 darüber hinaus mit zwei Antriebsrollen 56, 58 versehen. Die Antriebsrollen 56, 58 sind mit jeweils einem in Fig. 4 nicht erkennbaren Elektromotor gekoppelt.

An jedem Ende des Transportwagens 40 ist jeweils ein Sensor 60 vorgesehen, der ein Erreichen einer vorgesehenen Endposition in Längsrichtung erfasst und in Abhängigkeit des Sensorsignals der Sensoren 60 kann dann der Fahrantrieb des Transportwagens 40 gestoppt werden. Beispielsweise erkennt der in der Darstellung der Fig. 4 rechte Sensor 60, ob sich der Transportwagen 40 bereits unmittelbar vor einer Laderückwand eines Lastkraftwagens oder unmittelbar vor bereits abgestellten Paletten befindet. Bei Erfassung einer entsprechenden Position wird der Fahrantrieb des Transportwagens 40 angehalten und der Hubantrieb des Transportwagens 40 wird aktiviert, um Paletten aufzunehmen oder abzusetzen. Der in der Darstellung der Fig. 4 am linken Ende des Transportwagens 40 angeordnete Sensor 60 erfasst in ähnlicher Weise, ob sich der Transportwagen 40 bereits in der Übergabestation befindet und ob der Fahrantrieb abgeschaltet, angeschaltet bzw. der Hubantrieb aktiviert werden soll.

Darüber hinaus ist der Transportwagen 40 mit zwei seitlich angeordneten Sensoren S1 bzw. S2 versehen. Der Sensor S1 erfasst dabei den seitlichen Abstand des Transportwagens 40 zu einem benachbarten Transportwagen, wohingegen der Sensor S2 für die Erfassung eines seitlichen Abstandes zu einer Seitenbegrenzung, beispielsweise der seitlichen Wand des Aufbaus eines Lastkraftwagens vorgesehen ist.

Die Darstellung der Fig. 5 zeigt eine Ansicht auf die Schnittebene V-V der Fig. 3. Zu erkennen ist das schematisch dargestellte Fahrgestell 54, an dem die Transportrollen 52 drehbar gelagert sind. Auf dem Fahrgestell 54 sind weiterhin zwei Hubantriebe 62 sowie zwei Elektromotoren 64, 66 angeordnet. Der Elektromotor 64 ist der in Fig. 5 nicht erkennbaren Antriebsrolle 56 zugeordnet, wohingegen der Elektromotor 66 mit der Antriebsrolle 58 gekoppelt ist. Die Elektromotoren 64, 66 sind getrennt voneinander ansteuerbar, so dass die Antriebsrollen 56, 58 mit unterschiedlicher Geschwindigkeit angetrieben werden können und auch in unterschiedlicher Weise gebremst werden können. Die Hubantriebe 62 sind jeweils als elektromechanische Antriebe ausgebildet und weisen beispielsweise jeweils eine elektromotorisch angetriebene Spindel auf, die eine Spindelmutter bewegt. Mit der Spindelmutter ist eine Schubstange 68 verbunden, die wiederum mit einem zweiseitigen Hebel 70 gelenkig verbunden ist. Der Hebel 70 ist darüber hinaus gelenkig an einem Lagerbock 72 befestigt, der fest mit dem Fahrgestell 54 verbunden ist. Das der Schubstange 68 gegenüberliegende Ende des Hebels 70 ist gelenkig mit der Unterseite der Tragschiene 50 verbunden. Sobald sich die Spindel im Hubantrieb 62 dreht, wird die Schubstange 68 ausgelenkt und infolgedessen wird die Tragschiene 50 relativ zum Fahrgestell 54 angehoben oder abgesenkt, je nach Drehrichtung der Spindel im Hubantrieb 62. Die beiden Hubantriebe 62 sind miteinander gekoppelt, beispielsweise auf elektrischem Wege, um den Gleichlauf der beiden Hubantriebe 62 und damit das Anheben der Tragschiene 50 parallel zur Fahrbahnoberfläche 53 sicherzustellen.

Es ist in Fig. 5 zu erkennen, dass die rechte Hälfte und die linke Hälfte des Transportwagens 40 annähernd spiegelsymmetrisch zueinander aufgebaut sind und jeweils einen Hubantrieb 62, einen Fahrantrieb sowie vier Transportrollen 52 aufweisen. Alternativ kann auch ein einziger Hubantrieb oder ein einziger Fahrantrieb verwendet werden.

Die Darstellung der Fig. 6 zeigt eine Ansicht auf die Schnittebene VI-VI der Fig. 4. Zu erkennen ist, dass die Tragrollen 52 jeweils als Räderpaar rechts und links einer Mittellängsachse 74, die in Fig. 3 dargestellt ist, angeordnet sind. Der Transportwagen 40 liegt dadurch stabil auf der Fahrbahn 53 auf. Alternativ kann auch eine breite Tragrolle eingesetzt werden.

Zu erkennen ist weiter, dass der Elektromotor 64 die Antriebsrolle 56 antreibt, die in der Darstellung der Fig. 6 unterhalb der Mittellängsachse 74 angeordnet ist. Der Elektromotor 66 treibt die Antriebsrolle 58 an, die auf der gegenüberliegenden Seite der Mittellängsachse 74, in der Darstellung der Fig. 6 also oberhalb der Mittellängsachse angeordnet ist. Bei Synchronlauf der beiden Antriebsrollen 56, 58 bewegt sich der Transportwagen 40 somit geradlinig. Wie anhand der Fig. 2 erläutert wurde, bewegen sich die Transportwagen 40 an und für sich idealerweise lediglich entlang einem linearen Transportweg. Richtungskorrekturen sind lediglich erforderlich, um Richtungsabweichungen, beispielsweise durch unvorgesehene Hindernisse, zu korrigieren.

Anhand der Darstellung der Fig. 6 ist zu erkennen, dass die beiden Sensoren S1, S2 beide auf derselben Seite des Transportwagens 40 angeordnet sind und somit lediglich den Abstand zu einem auf der in der Darstellung der Fig. 6 unten liegenden Transportwagen bzw. zu einer unten liegenden Seitenbegrenzung erfassen können. Dies ist für eine Erfassung der Lage eines jeweiligen Transportwagens jedoch ausreichend, da mehrere nebeneinander angeordnete Transportwagen sich alle idealerweise auf einem linearen Pfad bewegen, so dass die Erfassung der Abstandes auf lediglich einer Seite ausreicht, um die Position des Transportwagens 40 zu bestimmen.

Die Darstellung der Fig. 7 zeigt ebenfalls eine Ansicht der Schnittebene V-V der Fig. 3, wobei der Transportwagen 40 in Fig. 7 aber im abgesenkten Zustand dargestellt ist. In diesem abgesenkten Zustand ist der Transportwagen 40 auf seiner ganzen Länge so niedrig, dass er in die Durchfahrtsöffnungen einer Palette 18 einfahren und diese vollständig durchqueren kann. Wie erörtert wurde, werden zum Anheben bzw. Absenken der Tragschiene 50 die beiden Hubantriebe 62 aktiviert und synchron betrieben, um einen Abstand zwischen der Oberseite der Tragschiene 50 und dem Fahrgestell 54, also auch einen Abstand zwischen der Fahrbahn 53 und der Oberseite der Tragschiene 50, zu vergrößern oder zu verringern und dabei die Oberseite der Trageschiene 50 parallel zur Fahrbahn 53 zu halten.

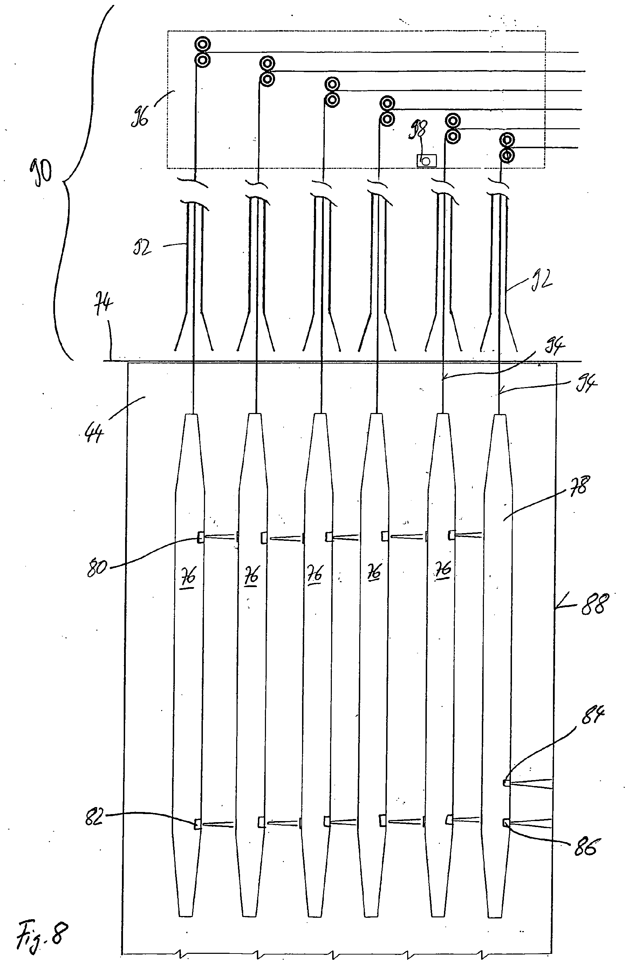

Die Darstellung der Fig. 8 zeigt schematisch eine Draufsicht auf ein erfindungsgemäßes Transportsystem gemäß einer weiteren Ausführungsform. In dieser Darstellung ist eine Laderampe lediglich durch ihre Vorderkante 74 schematisch dargestellt, wobei unmittelbar vor der Vorderkante 74 schematisch die Ladefläche 74 eines Lastkraftwagens dargestellt ist. Die Ladefläche 44 befindet sich exakt auf der gleichen Höhe wie die Laderampe und zwischen der Vorderkante der Vorderkante 74 der Laderampe und dem Beginn der Ladefläche 44 liegt lediglich ein kleiner, von den Transportwagen 76 bzw. 78 problemlos zu überfahrender Spalt. Die Transportwagen 76 sind auf der Ladefläche 44 dargestellt und weisen jeweils zwei Sensoren 80, 82 auf, die den Abstand zum jeweils benachbarten Transportwagen 76 bzw. 78 erfassen. Die Sensoren 80, 82 sind bei den Transportwagen 76 dabei so angeordnet, dass beide Sensoren 80, 82 den Abstand zur gleichen Seite hin erfassen, in der Darstellung der Fig. 8 den Abstand zu dem jeweils auf der rechten Seite liegenden Transportwagen 76 bzw. 78. Der in der Darstellung der Fig. 8 ganz rechte Transportwagen 78 weist zwei Sensoren 84, 86 auf, wobei beide Sensoren 84, 86 den Abstand zu einer Seitenwand 88 des LKWs erfassen. Da die beiden Sensoren 84, 86 des Transportwagens 78 in Transportrichtung gesehen hintereinander angeordnet sind, kann auch die Parallelität des Transportwagens 78 zur Seitenwand 88 erfasst werden. Der Sensor 84 an Transportwagen 78 kann aber beispielsweise auch weiter beabstandet als in Fig. 8 dargestellt vom Sensor 86 entfernt sein, um eine exaktere Erfassung der Parallelität des Transportwagens 78 zur Seitenwand des LKWs 88 zu ermöglichen. Da die weiteren Transportwagen 76 jeweils den Abstand zum rechts benachbarten Transportwagen 76, 78 erfassen, kann auf diese Weise die Position aller Transportwagen 76 bzw. 78 relativ zur Seitenwand 88 des LKWs bestimmt werden.

In einem Gebäudeabschnitt 90 der sich von der Vorderkante 74 der Laderampe aus erstreckt, sind für jeden Transportwagen 76 bzw. 78 Führungsschienen 92 vorgesehen. Diese Führungsschienen weisen im Bereich der Laderampe eine Erweiterung auf, um die Transportwagen 76, 78 auch bei leichten Kursabweichungen in die Führungsschienen 92 einzuführen. Die Führungsschienen 92 verlaufen dann geradlinig von der Laderampe bis zu einer Übergabestation, wie sie in Fig. 2 dargestellt ist. Die Führungsschienen 92 sind dabei vorteilhafterweise in die Fahrbahn versenkt, so dass sie problemlos in Querrichtung überlaufen oder auch von Gabelstaplern überfahren werden können. Die Führungsschienen 92 sind zweckmäßigerweise auf Größe und Position der Transportwagen 76, 78 abgestimmt.

Jeder Transportwagen 76, 78 ist mit einer elektrischen Zuleitung 94 versehen, die automatisch nachgeführt wird und bei einer Bewegung der Transportwagen 76, 78 von der Ladefläche 44 in Richtung zur Übergabestation auch als Zugseil dienen kann. Die elektrische Zuleitung 94 führt dabei elektrische Energie sowie Datensignale zu den Transportwagen 76, 78 sowie von diesen weg. Die elektrischen Zuleitungen 94 sind in einem Bereich 96, der hinter oder unter der Übergabestation liegt, unter die Fahrbahnoberfläche umgelenkt und werden unterhalb der Fahrbahnoberfläche in dem Bereich 96 dann seitlich umgelenkt. Der Bereich 96, in dem die elektrischen Zuleitungen 94 unterhalb der Fahrbahnoberfläche seitlich umgelenkt werden, befindet sich am Beispiel der Ausführungsform der Fig. 2 unterhalb der Übergabestationen 32a, 32b oder unterhalb der Wendevorrichtungen 36. Im Bereich 96 ist darüber hinaus ein Kabelsensor 98 vorgesehen, der eine Auszugslänge einer oder aller elektrischen Zuleitungen 94 erfasst. Mittels der Auszugslänge der elektrischen Zuleitungen 94 kann somit die Position der Transportwagen 76, 78 in Längsrichtung bestimmt werden. Diese Erfassung der Position der Transportwagen 76, 78 in Längsrichtung kann dazu verwendet werden, die Abstandssensoren 80, 82, 84, 86 nach dem Verlassen der Ladefläche 44 abzuschalten, da die Führung der Transportwagen 76, 78 dann durch die Führungsschienen 92 übernommen wird. In jedem Fall ist es sinnvoll, nach dem Verlassen der Ladefläche 44 die Abstandssensoren 84, 86 am Transportwagen 78 abzuschalten, da die Seitenwand 88 des Lastkraftwagens dann endet und die Sensoren 84, 86 dann keine sinnvollen Signale mehr liefern können.

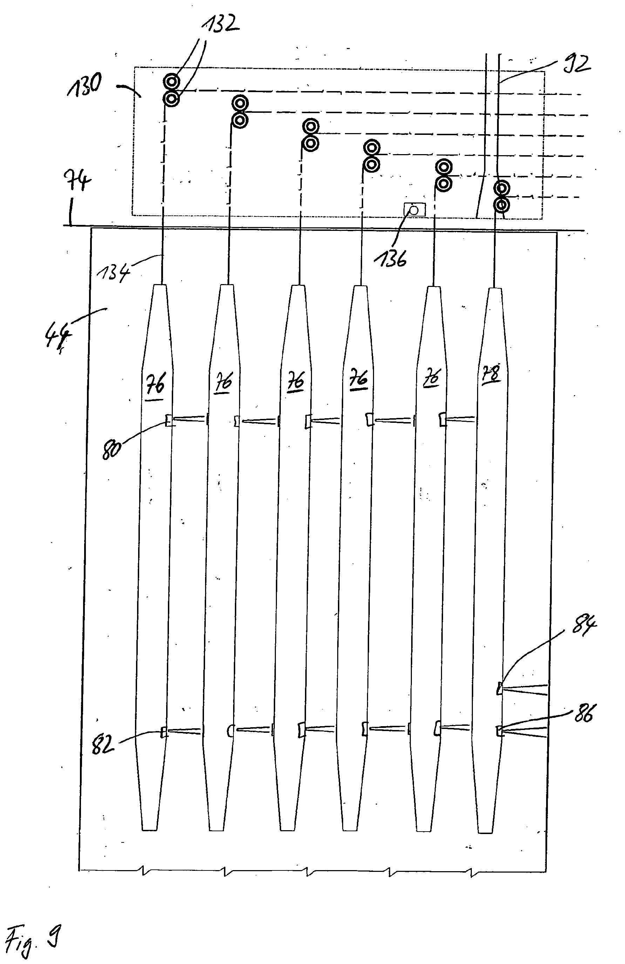

Die Darstellung der Fig. 9 zeigt eine schematische Draufsicht auf ein erfindungsgemäßes Transportsystem gemäß einer weiteren Ausführungsform der Erfindung. Das Transportsystem der Fig. 9 ist sehr ähnlich zum Transportsystem der Fig. 8 aufgebaut, so dass lediglich die Unterschiede erläutert werden funktionsgleiche Bauteile und Elemente des Transportsystems sind mit den gleichen Bezugszeichen versehen und werden nicht erneut erläutert.

Im Unterschied zum Transportsystem der Fig. 8 ist ein abgesenkter Bereich 130, in dem Umlenkrollen 132 für elektrische Kabelzuleitungen 134 der Transportwagen 76, 78 angeordnet sind, unmittelbar angrenzend an die Ladekante 74 einer Laderampe in einem Gebäude angeordnet. Da der Bereich 130 mit den Umlenkrollen 132 abgesenkt ist, ändern die elektrischen Zuleitungen 134 somit beim Überfahren des Bereichs 130 ihre Zugrichtung. Die Führungsschienen 92 sind identisch zum Transportsystem der Fig. 8 angeordnet, sie verlaufen aber auch oberhalb des abgesenkten Bereichs 130 mit den Umlenkrollen 132. Ein Sensor 136 im Bereich der Ladekante 74 und damit an einer Kante des Bereichs 130, der dieser Ladekante 74 zugewandt ist, erkennt das Vorbeifahren eines oder aller Transportwagen 76, 78 und schaltet die Sensoren 80, 82, 84, 86 entweder ein, wenn sich die Transportwagen 76, 78 auf ihrem Weg auf die Ladefläche 44 befinden, oder schaltet die Sensoren 80, 82, 84, 86 ab, wenn sich die Transportwagen 76, 78 von der Ladefläche 44 herunter und in die Führungsschienen 92 hinein bewegen. Das Transportsystem der Fig. 9 ist in baulicher Hinsicht vorteilhaft, da üblicherweise ein Stromanschluss für die elektrischen Zuleitungen 134 im Bereich der Gebäudekante, also damit auch im Bereich der Ladekante 74 zur Verfügung steht. Da die elektrischen Zuleitungen 134 im Bereich 130 umgelenkt werden und dieser Bereich 130 in der Nähe einer Gebäudekante liegt, ist deren elektrischer Anschluss erleichtert, da im Unterschied zum Transportsystem der Fig. 8 kein elektrischer Anschluss bis an die Übergabestelle hin verlegt werden muss.

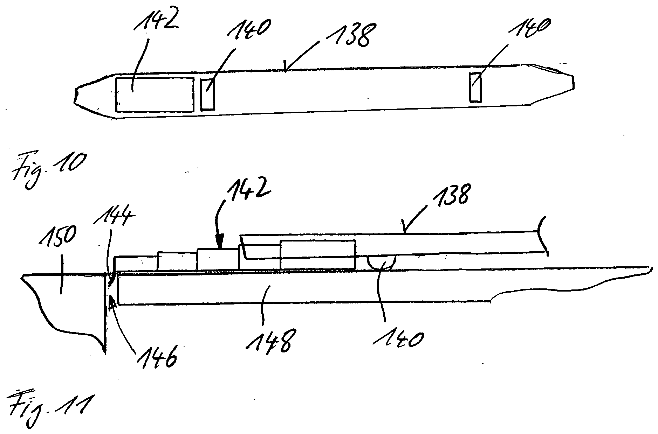

Die Darstellung der Fig. 10 zeigt einen erfindungsgemäßen Transportwagen 138 in einer schematischen Ansicht von unten. Dargestellt sind lediglich zwei Transportrollen 140 sowie eine Teleskopschieneneinheit 142, die im Transportwagen 138 angeordnet ist.

Wie in der schematischen abschnittsweisen Seitenansicht des Transportwagens 138 in Fig. 11 zu erkennen ist, kann die Teleskopschieneneinheit 142 auszogen werden und dadurch den Transportwagen 138 führen und damit auf einer vorgesehenen Spur halten. Wie in Fig. 11 zu erkennen ist, kann die Teleskopschieneneinheit 142 beispielsweise einen ausfahrbaren Eingreifhaken 144 aufweisen, der beim Überfahren eines Zwischenraums 146 zwischen einer Ladefläche 148 eines zu beladenden Nutzfahrzeugs und einer Laderampe 150 automatisch ausfährt und in den Zwischenraum 146 einhakt. Durch Ausziehen der Teleskopschieneneinheit während der Bewegung des Transportwagens 138, wie in Fig. 11 dargestellt, wird der Transportwagen 138 dann während seiner Bewegung auf der Ladefläche 148 seitlich geführt, um Paletten exakt parallel zur Seitenwand der Ladefläche einzubringen oder auszufahren. Bei der Rückkehr des Transportwagens 138 zum Zwischenraum 146 fährt die Teleskopschieneneinheit 142 automatisch ein, bis sie wieder die in Fig. 10 dargestellt vollständig eingefahrene Stellung einnimmt. Beim Verlassen der Ladefläche 148 fährt der Haken 144 automatisch ein und der Transportwagen 138 kann seinen Weg auf der Laderampe 150 fortsetzen, wobei er auf der Laderampe 150 beispielsweise durch Führungsschienen geführt ist.

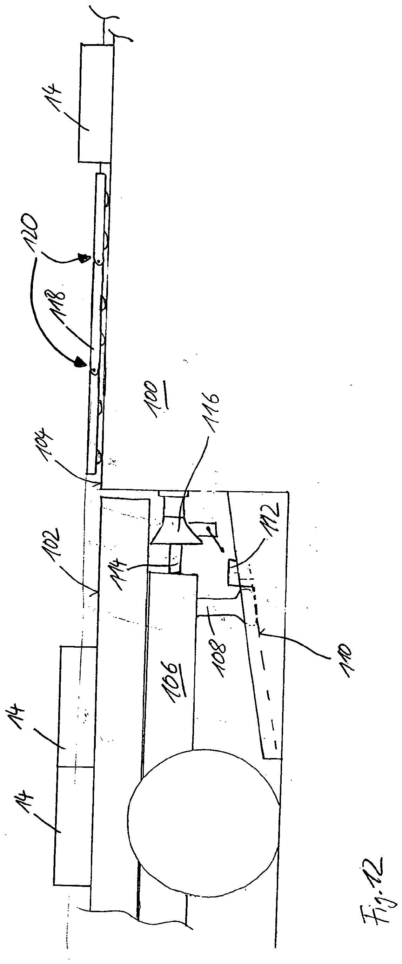

Die Darstellung der Fig. 12 zeigt eine schematische Seitenansicht eines weiteren Transportsystems mit einem nicht erfindungsgemäßen Transportwagens 120. Zu erkennen ist eine Laderampe 100, vor der ein Lastkraftwagen angeordnet ist, wobei der Lastkraftwagen mit dem Heck zur Laderampe 100 hin ausgerichtet ist. Um sicherzustellen, dass eine Ladefläche 102 des LKWs sich auf gleicher Höhe mit einer Fahrbahnoberfläche 104 der Laderampe 100 befindet und um vor allem sicherzustellen, dass sich die Höhenlage der Ladefläche 102 während des Beladevorgangs nicht ändert, ist ein Fahrgestell 106 des LKWs mit Gleitschuhen 108 versehen, die auf einer ansteigenden Gleitbahn 110 bis zu einem Anschlag 112 entlang geschoben sind. Mittels der ansteigenden Gleitbahn 110 wird die Ladefläche 102 exakt auf die gleiche Höhe mit der Fahrbahnoberfläche 104 gebracht und der Anschlag 112 sorgt dafür, dass das Ende der Ladefläche im Wesentlichen unmittelbar an der Vorderkante der Laderampe 100 platziert ist. Da die Gleitschuhe 108 am Fahrgestell 106 befestigt sind, kann die Ladefläche 102 beim Beladen nicht nach unten ausweichen, da zwischen der Gleitschiene 110 und der Ladefläche 102 eine im Wesentlichen starre Verbindung besteht.

Um darüber hinaus sicherzustellen, dass der Lastkraftwagen während des Beladevorgangs nicht unbeabsichtigt von der Laderampe 100 wegbewegt wird, ist am Fahrgestell 106 eine Öse 114 befestigt, die in eine gebäudefeste Klauenkupplung 116 eingreift. Beispielsweise kann vorgesehen sein, dass ein automatisierter Belade- oder Entladevorgang erst dann gestartet werden darf, wenn die Öse 114 in der Klauenkupplung 116 verriegelt ist. Bei der dargestellten Ausführungsform des erfindungsgemäßen Transportsystems ist die Ladefläche 102 somit während des Verladevorgangs sowohl in Höhenrichtung als auch in horizontaler Richtung relativ zur Fahrbahnoberfläche 104 der Laderampe 100 fixiert. Die Transportwagen 118 können somit Paletten 14 von einer Übergabestation aufnehmen, über die Vorderkante der Laderampe 100 hinaus auf die Ladefläche 102 transportieren und dort abstellen. Die Öse 114 und die Klauenkupplung 116 sowie die Gleitschuhe 108 und die Gleitschiene 110 stellen dabei lediglich ein Beispiel für mögliche Mittel dar, um die Ladefläche 102 in Höhenrichtung und in Längsrichtung relativ zur Laderampe 100 zu fixieren. Es ist aber festzustellen, dass die Ladefläche 102 und des LKWs selbst nicht modifiziert werden muss, um mit dem erfindungsgemäßen Transportsystem automatisiert be- oder entladen zu werden.

Der Transportwagen 120 weist zwei Gelenke 120 auf, so dass der Transportwagen 118 in drei gleichlange Abschnitte aufgeteilt wird, die jeweils die Länge einer Palette haben. Die Gelenke 120 ermöglichen eine Schwenkbewegung der Abschnitte zueinander, beispielsweise des in Fig. 12 linken Abschnitts relativ zum mittleren Abschnitt des Transportwagens 118 um eine Schwenkachse, die parallel zu der Fahrbahnoberfläche 104 und senkrecht zu einer Längsachse des Transportwagens 118 liegt. In der Darstellung der Fig. 12 stehen die Schwenkachsen somit senkrecht auf der Zeichenebene. Die Drehgelenke 120 sind so angeordnet, dass links und rechts jedes Drehgelenks 120 jeweils eine Palette auf dem Transportwagen 118 angeordnet werden kann. Steht die Ladefläche 102 dann in einem Winkel zur Fahrbahnoberfläche 104, beispielsweise weil eine Vorderachse des LKWs eingesunken ist, kann diese Unebenheit am Übergang zwischen Fahrbahnoberfläche 104 und Ladefläche 102 mittels des Gelenks 120 ausgeglichen und problemlos überwunden werden. Bei einer Ausbildung des Transportwagens 118 als Knicklenker erlauben die Drehgelenke 120 zusätzlich eine Schwenkbewegung der einzelnen Abschnitte um eine senkrecht zur Fahrbahnoberfläche 104 angeordnete Drehachse.

## Patentansprüche

1. Transportwagen (10; 40; 76; 78) für Paletten, mit einer Tragschiene, wenigstens zwei Tragrollen (52), einem Hubantrieb (62) für die Tragschiene (50) sowie einem Fahrantrieb (56, 58), wobei der Transportwagen (10; 40; 76, 78) im abgesenkten Zustand niedriger und schmäler ist als die Durchfahrtsöffnungen (18) einer Euro-Palette (14) und auf seiner gesamten Länge zum Unterfahren von Euro-Paletten (14) geeignet ist und unter den Euro-Paletten (14) hindurchfahren kann, wobei die wenigstens zwei Tragrollen (52), der Hubantrieb (62) und der Fahrantrieb (56, 58) zwischen einer durch die Aufstandspunkte der Tragrollen (52) definierten Fahrbahnebene (53) und einer Oberseite der Tragschiene (50) angeordnet sind, wobei die Tragschiene (50) eine durchgehende Oberseite des Transportwagens (10; 40; 76; 78) bildet, auf der die Paletten (14) ruhen können, wobei ausschließlich auf einer Seite des Transportwagens Sensoren (51, 52, 80, 82, 84, 86) zum Erfassen eines seitlichen Abstandes des Transportwagens zu einer Seitenbegrenzung und/oder zu einem weiteren Transportwagen (10; 40; 76; 78) vorgesehen sind, wobei Mittel zum Einleiten von Korrekturmaßnahmen mittels lenkbarer Tragrollen oder Antriebsrollen in Abhängigkeit der Sensorsignale vorgesehen sind und wobei am ersten und/oder am zweiten Ende des Transportwagens (10; 40; 76; 78) Sensoren (60) zum Erkennen eines Abstandes in Längsrichtung vorgesehen sind.

2. Transportwagen nach Anspruch 1, **dadurch gekennzeichnet, dass** die Tragschiene (50) in der Draufsicht eine langgestreckte rechteckartige Form aufweist, die sich an beiden Enden verjüngt.

3. Transportwagen nach Anspruch 1 oder 2, **dadurch gekennzeichnet, dass** die Tragschiene (50) einen U-förmigen Querschnitt aufweist, wobei eine Basis der U-Form eine Oberseite und die Schenkel nach unten abragende Seitenschürzen der Tragschiene (50) bilden.

4. Transportwagen nach wenigstens einem der vorstehenden Ansprüche, **dadurch gekennzeichnet, dass** eine Länge der Tragschiene (50) im Wesentlichen der Länge von drei hintereinander angeordneten Paletten (14) entspricht.

5. Transportwagen nach wenigstens einem der vorstehenden Ansprüche, **dadurch gekennzeichnet, dass** der Hubantrieb (62) als elektromechanischer Antrieb ausgebildet ist.

6. Transportwagen nach wenigstens einem der vorstehenden Ansprüche, **dadurch gekennzeichnet, dass** der Fahrantrieb als elektromotorischer Antrieb ausgebildet ist.

7. Transportwagen nach wenigstens einem der vorstehenden Ansprüche, **dadurch gekennzeichnet, dass** eine elektrische Kabelzuleitung (46) vorgesehen ist, die zur Aufnahme von zum Bewegen und/oder zum Korrigieren der Bewegungsrichtung des Transportwagens ausreichenden Kräften ausgebildet ist.

8. Transportsystem für Paletten, **gekennzeichnet durch** wenigstens zwei Transportwagen, insbesondere sechs Transportwagen, nach einem der vorstehenden Ansprüche.

9. Transportsystem nach Anspruch 8, **dadurch gekennzeichnet, dass** eine Fahrbahn für die Transportwagen wenigstens abschnittsweise, insbesondere in einem Gebäudeabschnitt, Führungsschienen aufweist.

10. Transportsystem nach Anspruch 8 oder 9, **dadurch gekennzeichnet, dass** eine Übergabestation (32a, 32b) vorgesehen ist, insbesondere in einem Gebäudeabschnitt, wobei in der Übergabestation (32a, 32b) Paletten (14) mittels Fördertechnik hintereinander aufgereiht anordenbar sind.

11. Transportsystem nach wenigstens einem der Ansprüche 8 bis 10, **dadurch gekennzeichnet, dass**, insbesondere in einem Gebäudeabschnitt, Umlenkrollen für elektrische Kabelzuleitungen (46) unterhalb der Fahrbahnebene angeordnet sind.

12. Transportsystem nach wenigstens einem der vorstehenden Ansprüche 8 bis 11, **dadurch gekennzeichnet, dass** Mittel zum Anheben und/oder Absenken einer Ladefläche eines zu beladenden Lastkraftwagens auf das Niveau der Fahrbahn an einer Laderampe, insbesondere im Gebäudeabschnitt, und/oder Mittel zum Blockieren eines Lastkraftwagens während des Verladevorgangs an der Laderampe vorgesehen sind.

13. Transportsystem nach wenigstens einem der vorstehenden Ansprüche 8 bis 12, **dadurch gekennzeichnet, dass** entlang einem Transportweg in einem Bereich zwischen einer Laderampe und einer Übergabestation für Paletten Sicherungsgitter (48) vorgesehen sind.

## Claims

1. Transport vehicle (10; 40; 76; 78) for pallets, comprising a supporting rail, at least two supporting rollers (52), a lift drive (62) for the supporting rail (50) and a traction drive (56, 58), wherein the transport vehicle (10; 40; 76, 78) in the lowered condition is lower and narrower than the passage openings (18) of a euro-pallet (14) and on its entire length is adapted to underriding of euro-pallets (14) and capable of passing through under the euro-pallets (14), wherein the at least two supporting rollers (52), the lift drive (62) and the traction drive (56, 58) are disposed between a track plane (53), as defined by the contact points of the supporting rollers (52), and an upper side of the supporting rail (50), wherein the supporting rail (50) constitutes a continuous upper side of the transport vehicle (10; 40; 76; 78), whereon the pallets (14) can rest, wherein sensors (51, 52, 80, 82, 84, 86) for detecting a lateral distance of the transport vehicle to a lateral boundary and/or to another transport vehicle (10; 40; 76; 78) are provided exclusively on one side of the transport vehicle, wherein means for initiating correcting actions by means of steerable supporting rollers or drive rollers in response to sensor signals are provided, and wherein on a first and/or on a second end of the transport vehicle (10; 40; 76; 78) sensors (60) for identifying a distance in the longitudinal direction are provided.

2. Transport vehicle according to claim 1, **characterized in that** the supporting rail (50) has, in a top view, an elongate rectangular shape tapering on both ends.

3. Transport vehicle according to claim 1 or 2, **characterized in that** the supporting rail (50) has a U-shaped cross section, wherein a base of the U-shape forms an upper side and the legs form downwards projecting side skirts of the supporting rail (50).

4. Transport vehicle according to at least one of the preceding claims, **characterized in that** a length of the supporting rail (50) corresponds essentially to the length of three successively arranged pallets (14).

5. Transport vehicle according to at least one of the preceding claims, **characterized in that** the lift drive (62) is an electromechanical drive.

6. Transport vehicle according to at least one of the preceding claims, **characterized in that** the traction drive is an electromotoric drive.

7. Transport vehicle according to at least one of the preceding claims, **characterized in that** an electric supply cable (46) is provided and configured for absorption of forces sufficient for moving and/or correcting the movement direction of the transport vehicle.

8. Transport system for pallets, **characterized by** at least two transport vehicles, in particular six transport vehicles, according to any of the preceding claims.

9. Transport system according to claim 8, **characterized in that** a track for the transport vehicles includes guiding rails at least in sections, in particular within a building section.

10. Transport system according to claim 8 or 9, **characterized in that** a delivery station (32a, 32b) is provided, in particular within a building section, wherein in the delivery station (32a, 32b) pallets (14) are arrangeable lined up in a row using conveyor technique.

11. Transport system according to at least one of the claims 8 to 10, **characterized in that**, in particular within a building section, deflector rollers for electric supply cables (46) are disposed below the track plane.

12. Transport system according to at least one of the claims 8 to 11, **characterized in that** means for raising and/or lowering a loading area of a truck to be loaded to the level of the track at a loading ramp, in particular within a building section, and/or means for blocking a truck during the loading procedure at the loading ramp are provided.

13. Transport system according to at least one of the claims 8 to 12, **characterized in that** protection grids (48) are provided along a transport path in a zone between a loading ramp and a delivery station for pallets.

## Revendications

1. Véhicule de transport (10 ; 40 ; 76 ; 78) pour palettes, avec un rail porteur, au moins deux rouleaux porteurs (52), un entraînement de levée (62) pour le rail porteur (50) ainsi qu'un entraînement de conduite (56, 58), le véhicule de transport (10 ; 40 ; 76, 78) étant plus bas et plus étroit à l'état abaissé que les ouvertures de passage (18) d'une europalette (14) et étant adapté sur sa longueur totale pour le passage par dessous d'europalettes (14) et pouvant passer de façon traversante sous les europalettes (14), les au moins deux rouleaux porteurs (52), l'entraînement de levée (62) et l'entraînement de conduite (56, 58) étant disposés entre un plan de couloir de conduite (53) défini par les points de contact des rouleaux porteurs (52) et un côté supérieur du rail porteur (50), le rail porteur (50) formant un côté supérieur traversant du véhicule de transport (10 ; 40 ; 76 ; 78) sur lequel les palettes (14) peuvent reposer, des capteurs (51, 52, 80, 82, 84, 86) disposés exclusivement sur un côté du véhicule de transport étant prévus pour détecter une distance latérale du véhicule de transport par rapport à une délimitation latérale et/ou à un autre véhicule de transport (10 ; 40 ; 76 ; 78), des moyens d'introduction de mesures de correction à l'aide de rouleaux porteurs dirigeables ou de rouleaux d'entraînement étant prévus en fonction des signaux de capteur et des capteurs (60) étant prévus au niveau de la première et/ou de la deuxième extrémité du véhicule de transport (10 ; 40 ; 76 ; 78) pour détecter une distance dans la direction longitudinale.

2. Véhicule de transport selon la revendication 1, **caractérisé en ce que** le rail porteur (50) présente dans la vue en élévation une forme de type rectangle allongé se rétrécissant au niveau des deux extrémités.

3. Véhicule de transport selon la revendication 1 ou 2, **caractérisé en ce que** le rail porteur (50) présente une section transversale en forme de U, une base de la forme de U formant un côté supérieur et les côtés formant des tabliers latéraux, saillant vers le bas, du rail porteur (50).

4. Véhicule de transport selon au moins l'une quelconque des revendications précédentes, **caractérisé en ce qu'**une longueur du rail porteur (50) correspond pour l'essentiel à la longueur de trois palettes (14) disposées les unes derrière les autres.

5. Véhicule de transport selon au moins l'une quelconque des revendications précédentes, **caractérisé en ce que** l'entraînement de levée (62) est réalisé sous la forme d'un entraînement électromécanique.

6. Véhicule de transport selon au moins l'une quelconque des revendications précédentes, **caractérisé en ce que** l'entraînement de conduite est réalisé sous la forme d'un entraînement électromotorisé.

7. Véhicule de transport selon au moins l'une quelconque des revendications précédentes, **caractérisé en ce qu'**une conduite par câble électrique (46) est prévue, celle-ci étant conçue pour absorber les forces suffisantes au déplacement et/ou à la correction de la direction de déplacement du véhicule de transport.

8. Système de transport pour palettes, **caractérisé par** la présence d'au moins deux véhicules de transport, notamment de six véhicules de transport, selon l'une quelconque des revendications précédentes.

9. Système de transport selon la revendication 8, **caractérisé en ce qu'**un couloir de conduite prévu pour des véhicules de transport comporte au moins en partie, notamment dans une section de bâtiment, des rails de guidage.

10. Système de transport selon la revendication 8 ou 9, **caractérisé en ce qu'**une station de transfert (32a, 32b) est prévue, notamment dans une section de bâtiment, sachant que des palettes (14) peuvent être agencées en ligne les unes derrière les autres dans la station de transfert (32a, 32b) par le biais d'une technique de transport.

11. Système de transport selon au moins l'une quelconque des revendications 8 à 10, **caractérisé en ce que**, notamment dans une section de bâtiment, des rouleaux de déviation pour conduites de câble électrique (46) sont disposés en dessous du plan de couloir de conduite.

12. Système de transport selon au moins l'une quelconque des revendications précédentes 8 à 11, **caractérisé en ce que** des moyens de soulèvement et/ou d'abaissement d'une surface de chargement d'un poids lourd à charger sont prévus sur le niveau du couloir de conduite au niveau d'une rampe de chargement, notamment dans la section de bâtiment, et/ou que des moyens de blocage d'un poids lourd sont prévus, pendant le processus de chargement, au niveau de la rampe de chargement.

13. Système de transport selon au moins l'une quelconque des revendications précédentes 8 à 12, **caractérisé en ce que** des grilles de fixation sont prévues le long d'une voie de transport, dans une zone située entre une rampe de chargement et une station de transfert de palettes (48).
